# EUROPEAN PATENT APPLICATION

(11) **EP 4 531 184 A1**
(43) Date of publication of application: **02.04.2025**
(21) Application number: 23200590.0
(22) Date of filing: 28.09.2023
(51) Int. Cl.: H01M 50/282, H01M 50/358, H01M 50/367

(54) **BATTERY SYSTEM COMPRISING IMPROVED COVER PLATE**

(71) Applicant: Samsung SDI Co., Ltd., Yongin-si, Gyeonggi-do 17084 (KR)
(72) Inventor: Pröll, Andreas Peter, 4184 Helfenberg (AT)
(74) Representative: Gulde & Partner

(57) **Abstract**

The present disclosure refers to A battery system (100) for an electric vehicle, including a housing accommodating a plurality of battery cells (12), wherein each of the battery cells (12) includes a venting side (13) with a venting exit (14) for allowing a venting gas stream to exit the battery cells (12), a cover plate (20) covering the plurality of battery cells (12) at the venting sides (13) to protect the battery cells (12) from venting products of the venting gas stream, the cover plate (20) including venting openings (22, 22', 22") aligned with the venting exits (14) for letting the venting gas stream pass through the cover plate (20), a thermally insulating sealing layer (30) arranged between the cover plate (20) and the venting sides (13) of the battery cells (12), the sealing layer (30) surrounding the venting exits (14), and mounting means (40) fixing the cover plate (20) to the housing of the battery system (100) such that the cover plate (20) exerts a compression force onto the sealing layer (30).

## Description

### Field of the Disclosure

The present disclosure relates to a battery system which more securely handles a thermal runaway of one or more of its battery cells. Further, the present invention relates to a vehicle including such a battery system.

### Technological Background

Recently, vehicles for transportation of goods and peoples have been developed that use electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. A hybrid vehicle may include a combination of an electric motor and conventional combustion engine. Generally, an electric-vehicle battery, EVB, or traction battery is a battery used to power the propulsion of battery electric vehicles, BEVs. Electric-vehicle batteries differ from starting, lighting, and ignition batteries in that they are designed to provide power for sustained periods of time. A rechargeable (or secondary) battery differs from a primary battery in that it is designed to be repeatedly charged and discharged, while the latter is designed to provide only an irreversible conversion of chemical to electrical energy. Low-capacity rechargeable batteries are used as power supplies for small electronic devices, such as cellular phones, notebook computers and camcorders, while high-capacity rechargeable batteries are used as power supplies for electric and hybrid vehicles and the like.

Generally, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case such as cylindrical or rectangular, may be selected based on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled to each other in series and/or in parallel so as to provide a high density such as for motor driving of a hybrid vehicle. For example, the battery module may be formed by interconnecting the electrode terminals of the plurality of unit battery cells in an arrangement or configuration depending on a desired amount of power and in order to realize a high-power rechargeable battery.

Battery modules can be constructed in either a block design or in a modular design. In the block design each battery is coupled to a common current collector structure and a common battery management system and the unit thereof is arranged in a housing. In the modular design, pluralities of battery cells are connected together to form submodules and several submodules are connected together to form the battery module. In automotive applications, battery systems generally include of a plurality of battery modules connected in series for providing a desired voltage. The battery modules may include submodules with a plurality of stacked battery cells and each stack includes cells connected in parallel that are, in turn, connected in series *(XpYs)* or cells connected in series that are, in turn, connected in parallel (XsYp).

A battery pack is a set of any number of (usually identical) battery modules. The battery modules may be configured in a series, parallel or a mixture of both to deliver the desired voltage, capacity, and/or power density. Components of a battery pack include the individual battery modules, and the interconnects, which provide electrical conductivity between the battery modules.

A thermal management system to provide thermal control of the battery pack is often included to safely use the at least one battery module by efficiently emitting, discharging and/or dissipating heat generated from its rechargeable batteries. If the heat emission, discharge, and/or dissipation is not sufficiently performed, temperature deviations may occur between respective battery cells, such that the at least one battery module may no longer generate a desired (or designed) amount of power. In addition, an increase of the internal temperature can lead to abnormal reactions occurring therein, and thus, charging and discharging performance of the rechargeable deteriorates and the life-span of the rechargeable battery is shortened. Thus, cell cooling for effectively emitting, discharging, and/or dissipating heat from the cells is important.

Exothermic decomposition of cell components may lead to a so-called thermal runaway. Generally, a thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, the thermal runaway is associated with strong exothermic reactions that are accelerated by temperature rise. These exothermic reactions include combustion of flammable gas compositions within the battery pack housing. For example, when a cell is heated above a critical temperature (typically above 150°C) the battery cell can transition into the thermal runaway. The initial heating may be caused by a local failure, such as a battery cell internal short circuit, heating from a defect electrical contact, short circuit to a neighboring battery cell. During the thermal runaway, a failed battery cell, i.e., a battery cell which has a local failure, may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack.

A venting concept for a battery in the related art is to let the venting gas stream including hot venting gases and particles exit the battery cell(s), expand into the battery housing and escape through a housing venting valve to the outside (e.g., to the environment of the battery housing). The venting gas stream thereby heats up the battery housing and components inside the battery housing and the particles may deposit onto the battery cells. To protect the battery cells from this, a cover element may be provided covering the battery cells at their venting side.

The cover element, for example, may include a non-conductive polymer or a mineral plate. However, such materials might not withstand the high temperatures and pressures during the thermal runaway and might mechanically disintegrate. In such a case, the venting gas stream might reach the other battery cells and transfer a significant amount of thermal energy to the battery cells which it comes in contact with, thus damaging the cells and possibly contributing to a thermal propagation of the runaway event to the remaining cells. Furthermore, the particles of the venting gas stream might contaminate the internal components of the battery pack, leading to conductive paths between metallic parts with different electrical potential (e.g., the housing and electrical connecting means such as busbars). This can lead to formation of arcs, which further accelerates the thermal propagation of a thermal runaway event to the remaining cells.

It is thus an object of the present invention to overcome or reduce at least some of the drawbacks of the prior art and to provide a battery system which more securely handles a thermal runaway of one or more of its battery cells without damaging components of the battery system.

### Summary of Invention

The present disclosure is defined by the appended claims. The description that follows is subjected to this limitation. Any disclosure lying outside the scope of the claims is intended for illustrative as well as comparative purposes.

According to one aspect of the present disclosure, a battery system is provided, including a housing accommodating a plurality of battery cells which are arranged to form one or more battery packs, wherein each of the battery cells includes a venting side with a venting exit for allowing a venting gas stream to exit the battery cells, a cover plate covering the plurality of battery cells at their venting sides to protect the battery cells from venting products of the venting gas stream, the cover plate including venting openings aligned with the venting exits for letting the venting gas stream pass through the cover plate, a thermally insulating sealing layer arranged between the cover plate and the venting side of the battery cells, the sealing layer surrounding the venting exits, and mounting means fixing the cover plate to the housing of the battery system such that the cover plate exerts a compression force onto the sealing layer.

According to an aspect of the present disclosure, the cover plate is made of metal. According to an embodiment, the cover plate is made of steel.

According to an aspect of the present disclosure, the cover plate includes a bent portion which is bent towards the battery cells. According to a respective aspect of the present disclosure, the bent portion has a trapezoidal shape.

According to an aspect of the present disclosure, the cover plate fully covers the venting sides of the battery cells.

According to an aspect of the present disclosure, the battery cells are interconnected with one another via electrical connecting means contacting electrode terminals of the battery cells, wherein the cover plate covers the electrode terminals and electrical connecting means such that they are shielded from venting products exiting the venting exit of one or more of the battery cells as the venting products deposit onto the cover plate in case of a thermal runaway.

According to an aspect of the present disclosure, the battery system further includes an insulation layer arranged between the cover plate and the electrical connecting means and/or electrode terminals. The insulation layer is preferably a ceramic felt layer.

According to an aspect of the present disclosure, the sealing layer includes a ceramic fiber plate.

According to an aspect of the present disclosure, the cover plate includes impressions, in particular rim-like impressions, around the venting openings.

According to an aspect of the present disclosure, the venting openings of the cover plate are sealed with a temperature-resistant diaphragm. According to an embodiment, the temperature-resistant diaphragm is a mica sheet.

According to an aspect of the present disclosure, the cover plate includes at least one spherical indentation which is indented towards the sealing layer, the spherical indentation including at least one of the venting openings.

According to an aspect of the present disclosure, one or more of the venting openings of the cover plate are respectively surrounded by an inclined outer surface of the cover plate, the inclined outer surface being inclined towards the venting opening.

According to another aspect of the present disclosure, a vehicle including a battery system as defined above is provided.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic perspective view of a battery system according to an embodiment.
- Fig. 2: illustrates a schematic a cross section of the battery system of Fig. 1.
- Figs. 3a and 3b: illustrate different embodiments of a venting opening of a cover plate of the battery system of Fig. 1.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/-5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. In the drawings, the sizes of elements may be exaggerated for clarity. These terms may in particular refer to the intended installation of the battery system inside an electric vehicle. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a housing and a plurality of battery cells accommodated inside the housing. The housing thus forming a battery housing. The battery cells may be interconnected via electrical connecting means, for example, busbars, contacting the respective electrode terminals of the battery cells to form one or more battery modules/battery packs. The battery cells are arranged to form one or more battery packs, wherein in a battery pack the battery cells are electrical interconnected, for example, in a series and/or in parallel as explained above. Multiple of these battery packs may form a battery module. Two or more of the battery packs may be stacked to form cell stacks. The battery cells may, for example, be prismatic or cylindrical cells. Each of the battery cells includes a venting exit at a venting side of the battery cell, which is preferably the terminal side of the battery cells, the venting exits allowing a venting gas stream to escape the battery cells during a thermal runaway. Venting valves may be provided at the venting exits.

The battery system further includes a cover plate covering at least part of the venting side of the battery cells. The cover plate may cover multiple battery cells at their venting side. The cover plate may be adapted to cover all of the battery cells of a battery pack. Also, the cover plate may be adapted to cover the battery cells of multiple cell stacks and may thus provide a one-piece solution for covering the battery cells. The cover plate may cover the venting side around the venting exits. The cover plate includes venting openings in the form of through-holes, the venting openings being each aligned with one of the venting exits of the battery cells so that the venting gas stream exiting one of the battery cells via its venting exit may pass through the corresponding venting opening. The cover plate is mechanically rigid meaning that the cover plate is devoid of flexibility. In other words, the cover plate is stiff and unyielding at least with respect to forces commonly occurring during a thermal runaway of one or more of the battery cells. That is, the cover plate is mechanically rigid such that it may withstand forces commonly occurring during a thermal runaway of one or more of the battery cells without substantially bending and/or without breaking and/or such that the cover plate may stay structurally integrated with the housing to which it is fixed. The rigidity can be achieved by a suitable choice of material, e.g. steel, and/or material thickness and/or the shape of the cover plate as explained later. The cover plate covers the plurality of battery cells at their venting sides such that the cover plate protects the covered battery cells from depositing venting products of the venting gas stream. The cover plate is preferably adapted to withstand the temperatures usually occurring during a thermal runaway, i.e. temperatures of at least 700° C, or at least 1000° C.

A thermally insulating sealing layer is disposed between the cover plate and the venting side of the battery cells. The sealing layer provides a seal between the battery cells and the cover plate to prevent the venting gas stream flowing in-between the battery cells and the cover plate and to prevent heat transfer from the cover plate to the battery cells. The sealing layer surrounds the venting exits of the battery cells. The sealing layer may also surround the venting openings of the cover plate which are arranged on the other side of the sealing layer. The sealing layer includes or consists of a high-temperature sealing material, for example, a ceramic fiber plate. The sealing layer is adapted to withstand the temperatures usually occurring during a thermal runaway, i.e. temperatures of at least 700° C, or at least 1000° C.

According to the invention, the cover plate exerts a compression force onto the sealing layer. In other words, the cover plate is adapted to exert or apply the compression force onto the sealing layer. The compression force compresses the sealing layer. The sealing layer is thus compressible at least to some degree. That is, the sealing layer may be compressible to such an extent that a sufficient sealing is achieved by the cover plate applying the compression force to the sealing layer. To achieve this, the battery system includes mounting means that fix the cover plate to the housing of the battery system. The housing serves as a counter bearing for the mounting means/cover plate. The mounting means may clamp or press the cover plate against the sealing layer wherein a respective counter force is provided by the housing, i.e. the structural part of the housing to which the mounting means are attached. The compression force may thus also be considered a clamping force. The compression force exerted by the cover plate is sufficiently high to maintain the sealing provided by the sealing layer throughout the whole duration of a thermal runaway of one or more of the battery cells. In other words, a minimum compression force is maintained that is sufficient to seal the cover plate to the battery cells throughout the whole duration of the thermal runaway. Because the cover plate is mechanically rigid, it is suited and adapted to exert the compression force onto the sealing layer, i.e. to transfer the compression force from the mounting means to the sealing layer. For example, the cover plate may be adapted to exert the compression force onto the whole/complete area of the sealing layer and not only onto an area near the mounting points where the mounting means contact the cover plate. In other words, the mechanically rigid cover plate is adapted to transfer the force applied by the mounting means to the cover plate onto the whole sealing layer.

As a result, the inventive cover plate and therefore the sealing provided by the sealing layer may withstand the temperatures and pressures that may build up during a thermal runaway of one or more of the battery cells. As the cover plate is mechanically rigid and pressed/clamped against the sealing layer even the counterforces usually occurring during the thermal runaway do not exceed the compression force. Rather, at least a minimum force applied from the cover plate to the sealing layer remains even during thermal runaway. Therefore, the cover plate, the sealing layer and thus the sealing will not mechanically disintegrate during thermal runaway. The venting gas stream is thus prevented from reaching the other battery cells hindering thermal propagation of the runaway event to the remaining cells. Further, the particles of the venting gas stream deposit onto the outer surface of the cover plate so that the battery cells and the sealing layer are shielded from them. While such a deposit may heat up the cover plate, the sealing layer being thermally insulating prevents or at least reduces heat transfer from the cover plate to the battery cells thus protecting the battery cells.

According to an embodiment, the cover plate is made of metal. For example, the cover plate is made of steel. In other words, the cover plate may be a metal plate, for example, a steel plate. The cover plate may consist of metal/steel or be mainly include metal/steel. Metal (e.g., steel) is suited for providing the cover plate with stiffness and thus making the cover plate mechanically rigid. The material thickness and/or shape of the cover plate may be chosen depending on the material such that the cover plate is mechanically rigid enough to withstand the above-explained forces during a thermal runaway. According to a respective embodiment, the cover plate may be a bi-metallic plate, for example, a steel alloy. Thus, the cover plate may consist of or be mainly comprised of a bi-metallic composition, for example, a steel alloy.

According to an embodiment, the cover plate includes a bent portion which is bent towards the battery cells, i.e. towards the venting side of the battery cells. The bent portion is bent towards the battery cells to ensure that the compression force is exerted homogeneously/uniformly to the sealing layer over the whole area of the sealing layer. The bent portion is bent towards the battery cells in that it extends towards the venting side of the battery cells farther than an adjacent portion of the cover plate adjacent to the bent portion. The bent portion may form an indentation or trench in the cover plate with a base thereof contacting the sealing layer. The bent portion is introduced into the cover plate during manufacturing of the cover plate and may thus be considered a pre-bent portion. The bent portion may be arranged at an area of the cover plate between the mounting points where the mounting means are contacting the cover plate, in particular in the middle between two mounting means. Thus, the bent portion of the cover plate is bent towards the battery cells between the mounting positions of a first and second mounting means. The bent portion ensures a homogeneous/ uniform compression of the sealing layer over the whole area of the sealing layer. In other words, due to the bent portion the cover plate may be adapted to exert or transfer the compression force onto the sealing layer throughout the whole length/area of the cover plate and thus of the sealing layer. Without such a bent portion, the cover plate might only exert a sufficient compression force to the battery cells or parts of battery cells close to the mounting means. Then only the outer battery cells in an arrangement direction of the battery cells and/or only the outer edges of the sealing layer in the transverse direction would have a sufficient sealing. With the cover plate having the bent portion sufficient sealing during thermal runway is ensured over the whole extension of the sealing layer.

According to a respective embodiment, the bent portion has a trapezoidal shape. In other words, the bent portion forms a trapezoidal indentation towards the battery cells with a base thereof contacting the sealing layer. Thus, the bent portion is bent towards the battery cells in the form of a trapezoid. The trapezoid formed by the bent portion has a base and two legs interconnected by the base, the legs are inclined inversely and relative to a vertical axis forming undercuts with respect to the adjacent portions of the cover plate. In other words, a width of the indentation or trench formed by the bent portion is larger closer to the battery cells and smaller farther away from the battery cells. The bent portion having such a trapezoidal shape ensures particularly well that the compression force is exerted homogeneously to the sealing layer over the whole area of the sealing layer.

According to an embodiment, the cover plate fully covers the venting sides of the battery cells. In other words, the cover plate extends along the whole/complete venting side of the battery cells. The cover plate may fully cover the battery cells at an upper or lower side thereof. For example, the cover plate fully covers the venting sides of the battery cells side aside from the venting openings, so that a venting gas stream leaving one or more of the battery cells through their respective venting exits may still pass through the cover plate. The cover plate fully covering the battery cells shields the battery cells at their venting sides completely from the venting gas stream, in other words, from venting products, e.g. particles, of the venting gas stream as these can only deposit onto the cover plate not onto the battery cells. The cover plate may also cover the electrical connecting means interconnecting the battery cells.

According to an embodiment, the battery cells are interconnected with one another via the electrical connecting means contacting electrode terminals of the battery cells, wherein the cover plate covers the electrode terminals and electrical connecting means such that they are shielded from venting products exiting the venting exit of one or more of the battery cells as the venting products deposit onto the cover plate in case of a thermal runaway. The electrical connecting means may, for example, be busbars connecting the electrode terminals of the battery cells as explained above. According to this embodiment, the cover plate also the electrode terminals and the electrical connecting means thereby protecting these from the venting gas stream and in particular from venting products which would otherwise deposit onto theses terminals and connecting means in case of a thermal runaway. This prevents damage to the terminals and connecting means. Also, this prevents short-circuits or arcing between the connecting means which would otherwise lead to further damage.

According to a respective embodiment, the battery system further includes an insulation layer arranged between the cover plate and the electrical connecting means and/or the electrode terminals. The insulation layer may be an electrically and/or thermally insulating insulation layer. One or more of such insulation layers may be provided, for example, for each electrical connecting means. For example, both the connecting means connecting to the two electrode terminals may be provided with such an insulation layer. In this embodiment, the cover plate covers the electrode terminals and electrical connecting means, wherein the insulation layer is provided in between. The insulation layer may extend along one or more sides of the connecting means as well. Also, the insulation layer may extend along the sides of the electrode terminals. The insulation layer may extend from the electrical connecting means and electrode terminals unto the venting side, i.e. towards the venting side of the battery cells and contacting the venting side. The insulation layer may include one or more of a ceramic felt layer, a ceramic fiber fleece, a needle mat, expanded polymeric materials. These are suited for electrical/thermal insulation of the electrode terminals and electrical connecting means. The insulation layer according to this embodiment protects the electrode terminals and electrical connecting means from heat transfer or electrical conduction from the cover plate which may otherwise occur due to venting products which may deposit onto the cover plate. Further, for example when extending unto the venting side, such insulation layer may prevent contamination of the terminals and connecting means by venting gas, should such venting gas somehow leak through the compressed sealing layer. The cover plate, being fixed to the housing of the battery system vie the mounting means, may exert compression force also onto these onto the insulation layer thereby ensuring the insulation of the electrode terminals and electrical connecting means also and in particular during a thermal runaway.

According to an embodiment, the sealing layer includes a ceramic fiber plate. Also, the sealing layer may consist of a ceramic fiber plate. In such a plate the ceramic fibers may be embedded in a matrix, e.g. via a resin. Such ceramic fiber plate is suited as thermal insulation withstanding the high temperatures occurring during a thermal runaway. Further, such a ceramic fiber plate is sufficiently compressible by the cover plate exerting the compression force so that the above-explained sealing may be achieved that can withstand the pressure and temperature of the thermal runaway.

According to an embodiment, the cover plate includes impressions, for example, rim-like impressions, around the venting openings. Such impressions may increase the compression force on the sealing layer.

According to an embodiment, the venting openings of the cover plate are sealed with a temperature-resistant diaphragm. The diaphragm may for example be a mica sheet, i.e. a sheet of mica silicate minerals. Such a diaphragm seals the venting openings and thus prevents any outside contamination, e.g. moisture or other particles, entering the battery cells through their venting exits during normal operation. The diaphragm is adapted to rupture during a thermal runaway event, i.e. a venting gas stream exiting the venting exit of one or more of the battery cells will rupture the diaphragm and thus pass through the venting opening and therefore through the cover plate.

According to an embodiment, one or more of the venting openings of the cover plate are respectively surrounded by an inclined outer surface of the cover plate, the inclined outer surface being inclined towards the venting opening. In other words, the outer surface of the cover plate surrounding the venting opening may be tapered or funnel-shaped towards the venting opening. Thus, a cross section of the venting opening may widen viewed along a venting direction. This may allow for an improved venting of the venting gas stream exiting through the venting opening as the venting gas stream may rapidly expand to all sides due to the widening cross section.

According to an embodiment, the cover plate includes at least one spherical indentation which is indented towards the sealing layer, the spherical indentation including at least one of the venting openings. In other words, one or more of the venting openings of the cover plate may be arranged at the bottom of a respective spherical indentation in the cover plate. In other words, the spherical indentation may form a concave portion of the cover plate and may include the venting opening. For each of the venting openings one of such spherical indentations may be provided. The spherical indentation being indented towards the sealing layer locally increases the contact pressure on the sealing layer around the venting exit of the battery cell and therefore further improves the sealing.

The invention also pertains to an electric vehicle including a battery system according to the invention.

### Specific Embodiments

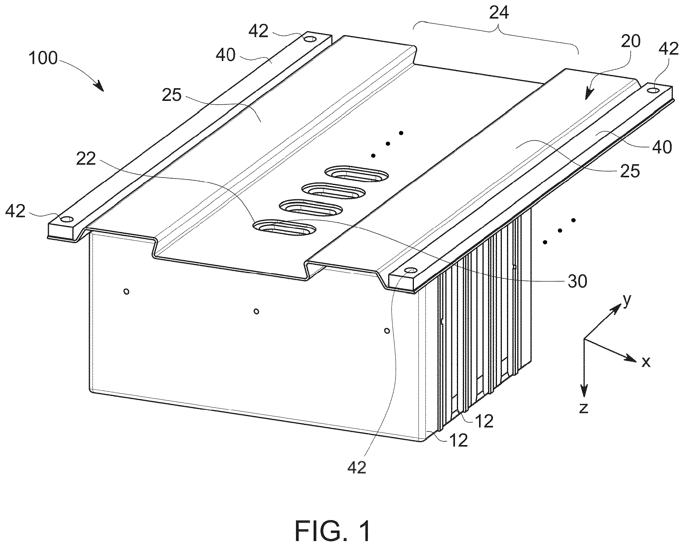

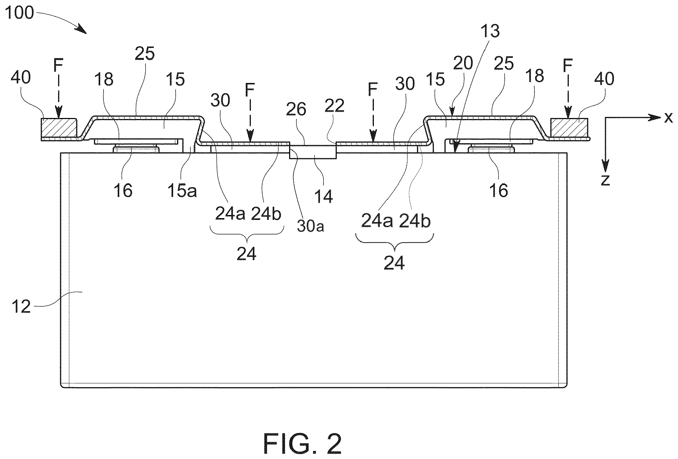

Fig. 1 and 2 show schematically a battery system 100 according to an embodiment of the invention. The battery system 100 includes a not-shown (battery) housing accommodating a plurality of battery cells 12. For illustration purposes, only four battery cells are shown, wherein only two of them are provided with reference signs.

The battery cells 12 each include two electrode terminals 16, wherein the electrode terminals 16 of neighboring battery cells 12 are interconnected via electrical connecting means 18, for example, busbars, see Fig. 2. The battery cells 12 are thus arranged to form one or more battery packs. Each of the battery cells 12 includes a venting side 13 with a venting exit 14 for allowing a venting gas stream to exit the battery cells 12 in case of a thermal runaway occurring inside the respective battery cell 12.

The battery system 100 further includes a mechanically rigid cover plate 20 fully covering the plurality of battery cells 12 at their venting sides 13, i.e. the cover plate 20 extends so far along an x-axis and along a y-axis that it fully covers the below battery cells 12. The cover plate 20 therefore, with protruding portions 25, also extends above and covers the two electrode terminals 16 and the electrical connecting means 18, see Fig. 2. The cover plate 20 includes venting openings 22 that are aligned with the venting exits 14 for letting the venting gas stream pass through the cover plate 20. Thus, the cover plate 20 covers the battery cells 12 at their venting sides 13 completely aside from the venting exits 14 as these are aligned with the venting openings 22. Thus, a venting gas stream exiting one or more of the battery cells 12 through their venting exits 14 during a thermal runaway may pass through the venting openings 22 to the outer side of the cover plate 20.

Further, the cover plate 20 includes a bent portion 24 having a trapezoidal shape. The bent portion 24 includes two legs 24a that are interconnected by a base 24b. Below the base 24b a thermally insulating sealing layer 30 is arranged on top of the battery cells 12 and thus between the cover plate 20 and the venting side 13 of the battery cells 12. The sealing layer 30 surrounds the venting exits 14, i.e. the sealing layer 30 also includes openings 30a through which the venting gas stream leaving the venting exits 14 may pass.

Mounting means 40 are attached to the cover plate 20 at opposite ends thereof at mounting points 42. The mounting means 40 fix the cover plate 20 to the non-shown housing of the battery system 100 and thereby press of clamp the cover plate 20 onto the such that the cover plate 20 exerts a compression force F (indicated by dashed arrows) onto the sealing layer 30. In other words, the housing serves as a counter bearing for the mounting means 40 so that the mounting means may exert a force onto the cover plate 20 and the cover plate 20 may in turn exert the compression force onto the sealing layer 30. The cover plate 20 thus compresses the sealing layer 30, which is a ceramic fiber plate, for example.

This improves the sealing, preventing the venting gas stream from entering in-between the cover plate 20 and the venting side 13 of the battery cells 12. Further, the sealing layer 30 thermally insulates the battery cells 12 from the cover plate 20 and thus prevents or reduces a heat transfer from the cover plate 20 to the venting side 13. The battery cells 12 are thus shielded from any venting products depositing onto the cover plate 20 without heat being transferred from the cover plate 20 which is heated-up by the venting products. As the cover plate 20 is mechanically rigid and pressed/clamped against the sealing layer 30 by the mounting means 40 even the counterforces usually occurring during a thermal runaway do not exceed the compression force. Thanks to the bent portion 24, the cover plate 20 may exert the compression force uniformly/ homogenously onto the whole area of the sealing layer 30 and not only near the mounting means 40. That is, due to the shape of the cover plate 20, the cover plate 20 may effectively and uniformly transfer the force received via the mounting means 40 to the sealing layer 30.

As a result, the inventive cover plate 20 and therefore the sealing provided by the sealing layer 30 may withstand the temperatures and pressures that may build up during a thermal runaway of one or more of the battery cells 12. Therefore, the cover plate 20, the sealing layer 30 and thus the sealing will withstand the thermal runaway. The venting gas stream is thus prevented from reaching the other battery cells 12 and thermal propagation of the runaway event to the remaining cells is hindered. Further, the particles of the venting gas stream deposit onto the outer surface of the cover plate 20 so that the battery cells 12 and the sealing layer are shielded from them. While such a deposit may heat up the cover plate 20, the sealing layer 30 being thermally insulating prevents or at least reduces heat transfer from the cover plate 20 to the battery cells 12 thus protecting the battery cells 12.

The battery system 100 further includes insulation layers 15 arranged between the cover plate 20 at its protruding portions 25 and the electrical connecting means 18. The insulation layer 15 is an electrically and thermally insulating insulation layer. As shown in Fig. 2, the insulation layers 15 extends with an extension portion 15a along the inner sides of the connecting means 18 and electrode terminals 16 onto the venting sides 13. The insulation layers 15 protect the electrode terminals 16 and electrical connecting means 18 from heat transfer and electrical conduction with the cover plate 20. Further, as the extension portions 15a extend unto the venting side 13, the insulation layers 15 prevent contamination of the electrode terminals 16 and connecting means 18 by venting gas, should such venting gas somehow leak through the compressed sealing layer 30.

Further, the cover plate 20 exerts compression force via its protruding portions 25 onto the insulations layer 15 thereby ensuring the insulation of the electrode terminals 16 and electrical connecting means 18 also and during a thermal runaway.

The venting openings 22 of the cover plate 20 are each sealed with a temperature-resistant diaphragm 26 preventing any outside contamination, e.g. moisture or other particles, entering the battery cells 12 through their venting exits 14 during normal operation. The diaphragm 26 is adapted to rupture during a thermal runaway event, i.e. a venting gas stream exiting the venting exit 14 of one or more of the battery cells 12 will rupture the diaphragm 26 and thus pass through the venting opening 22 and therefore through the cover plate 20.

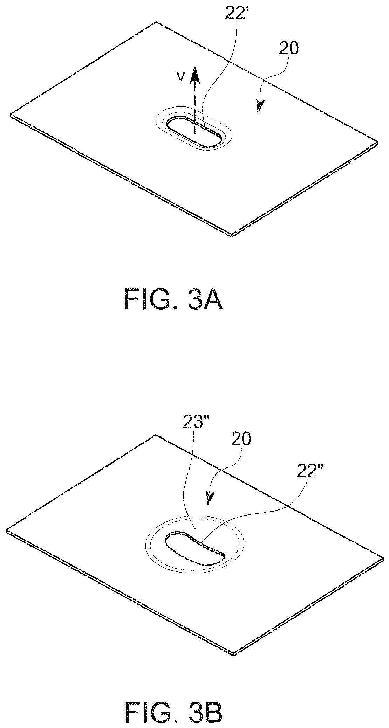

Figures 3 a) and 3 b) show different embodiments of the venting openings 22', 22" of the cover plate 20, wherein the cover plate 20 is only shown in part such that only one venting opening 22', 22" is visible.

In the embodiment of Fig. 3 a), the outer surface of the cover plate 20 surrounding the venting opening 22' is inclined towards the venting opening 22'. In other words, the outer surface of the cover plate 20 surrounding the venting opening 22' is tapered or funnel-shaped towards the venting opening 22'. Thus, a cross section of the venting opening 22' widens when viewed along a venting direction V. This may allow for an improved venting of the venting gas stream exiting through the venting opening 22' as the venting gas stream may rapidly expand to all sides due to the widening cross section.

In the embodiment of Fig. 3 b), the cover plate 20 includes a spherical indentation 23" which is indented towards the sealing layer 30, the spherical indentation 23" including the venting opening 22". In other words, the venting opening 22" of the cover plate 20 is arranged at the bottom of the spherical indentation 23". In other words, the spherical indentation 23" forms a concave portion of the cover plate 20 and includes the venting opening 22". This embodiment, due to the spherical indentation 23" being indented towards the sealing layer 30, locally increases the contact pressure on the sealing layer 30 around the venting exit 14 of the battery cell 12 and therefore further improves the sealing.

### Reference signs

- 12: battery cells
- 13: venting sides
- 14: venting exits
- 15: insulation layers
- 15a: extension portions of insulation layers
- 16: electrode terminals
- 18: electrical connecting means
- 20: cover plate
- 22: venting openings
- 22': venting opening
- 22": venting opening
- 23": spherical indentation including venting opening
- 24: bent portion of cover plate
- 24a: legs of bent portion
- 24b: base of bent portion
- 25: protruding portion
- 26: diaphragm
- 30: sealing layer
- 40: mounting means
- 42: mounting points
- 100: battery system
- V: venting direction

## Claims

1. A battery system (100) for an electric vehicle, comprising
a housing accommodating a plurality of battery cells (12), wherein each of the battery cells (12) comprises a venting side (13) with a venting exit (14) for allowing a venting gas stream to exit the battery cells (12),
a cover plate (20) covering the plurality of battery cells (12) at the venting sides (13) to protect the battery cells (12) from venting products of the venting gas stream, the cover plate (20) comprising venting openings (22, 22', 22") aligned with the venting exits (14) for letting the venting gas stream pass through the cover plate (20),
a thermally insulating sealing layer (30) arranged between the cover plate (20) and the venting sides (13) of the battery cells (12), the sealing layer (30) surrounding the venting exits (14), and
mounting means (40) fixing the cover plate (20) to the housing such that the cover plate (20) exerts a compression force onto the sealing layer (30).

2. The battery system (100) according to claim 1, wherein the cover plate (20) is made of metal, in particular of steel.

3. The battery system (100) according to claim 1 or 2, wherein the cover plate (20) comprises a bent portion (24) which is bent towards the battery cells (12).

4. The battery system (100) according to claim 3, wherein the bent portion (24) has a trapezoidal shape.

5. The battery system (100) according to any one of the preceding claims, wherein the cover plate (20) fully covers the venting sides (13) of the battery cells (12).

6. The battery system (100) according to any one of the preceding claims, wherein the battery cells (12) are interconnected with one another via electrical connecting means (18) contacting electrode terminals (16) of the battery cells (12), wherein the cover plate (20) covers the electrode terminals (16) and electrical connecting means (18) such that the electrode terminals (16) and electrical connecting means (18) are shielded from venting products exiting the venting exit (14) of one or more of the battery cells (12) as the venting products deposit onto the cover plate (20) in case of a thermal runaway.

7. The battery system (100) according to claim 6, further comprising an insulation layer (15) arranged between the cover plate (20) and the electrical connecting means (18) and/or electrode terminals (16).

8. The battery system (100) according to claim 7, wherein the insulation layer (15) comprises a ceramic felt layer.

9. The battery system (100) according to any one of the preceding claims, wherein the sealing layer (30) comprises a ceramic fiber plate.

10. The battery system (100) according to any one of the preceding claims, wherein the cover plate (20) comprises impressions, in particular rim-like impressions, around the venting openings (22, 22', 22").

11. The battery system (100) according to any one of the preceding claims, wherein the venting openings (22, 22', 22") of the cover plate (20) are sealed with a temperature-resistant diaphragm (26), in particular a mica sheet.

12. The battery system (100) according to any one of the preceding claims, wherein the cover plate (20) comprises at least one spherical indentation (23") which is indented towards the sealing layer (30), the spherical indentation (23") comprising at least one of the venting openings (22").

13. The battery system (100) according to any one of the preceding claims, wherein one or more of the venting openings (22') of the cover plate (20) are surrounded by an inclined outer surface of the cover plate (20), the inclined outer surface being inclined towards the venting opening (22').

14. An electric vehicle comprising the battery system (100) according to any one of the preceding claims.

## Amended claims

### Amended claims in accordance with Rule 137(2) EPC.

1. A battery system (100) for an electric vehicle, comprising
a housing accommodating a plurality of battery cells (12), wherein each of the battery cells (12) comprises a venting side (13) with a venting exit (14) for allowing a venting gas stream to exit the battery cells (12),
a mechanically rigid cover plate (20) covering the plurality of battery cells (12) at the venting sides (13) to protect the battery cells (12) from venting products of the venting gas stream, the cover plate (20) comprising venting openings (22, 22', 22") aligned with the venting exits (14) for letting the venting gas stream pass through the cover plate (20),
a thermally insulating sealing layer (30) arranged between the cover plate (20) and the venting sides (13) of the battery cells (12), the sealing layer (30) surrounding the venting exits (14), and
mounting means (40) fixing the cover plate (20) to the housing such that the cover plate (20) exerts a compression force onto the sealing layer (30).

2. The battery system (100) according to claim 1, wherein the cover plate (20) is made of metal, in particular of steel.

3. The battery system (100) according to claim 1 or 2, wherein the cover plate (20) comprises a bent portion (24) which is bent towards the battery cells (12).

4. The battery system (100) according to claim 3, wherein the bent portion (24) forms a trapezoidal indentation towards the battery cells (12) with a base (24b) thereof contacting the sealing layer (30).

5. The battery system (100) according to any one of the preceding claims, wherein the cover plate (20) fully covers the venting sides (13) of the battery cells (12).

6. The battery system (100) according to any one of the preceding claims, wherein the battery cells (12) are interconnected with one another via electrical connecting means (18) contacting electrode terminals (16) of the battery cells (12), wherein the cover plate (20) covers the electrode terminals (16) and electrical connecting means (18) such that the electrode terminals (16) and electrical connecting means (18) are shielded from venting products exiting the venting exit (14) of one or more of the battery cells (12) as the venting products deposit onto the cover plate (20) in case of a thermal runaway.

7. The battery system (100) according to claim 6, further comprising an insulation layer (15) arranged between the cover plate (20) and the electrical connecting means (18) and/or electrode terminals (16).

8. The battery system (100) according to claim 7, wherein the insulation layer (15) comprises a ceramic felt layer.

9. The battery system (100) according to any one of the preceding claims, wherein the sealing layer (30) comprises a ceramic fiber plate.

10. The battery system (100) according to any one of the preceding claims, wherein the cover plate (20) comprises impressions, in particular rim-like impressions, around the venting openings (22, 22', 22").

11. The battery system (100) according to any one of the preceding claims, wherein the venting openings (22, 22', 22") of the cover plate (20) are sealed with a temperature-resistant diaphragm (26), in particular a mica sheet.

12. The battery system (100) according to any one of the preceding claims, wherein the cover plate (20) comprises at least one spherical indentation (23") which is indented towards the sealing layer (30), the spherical indentation (23") comprising at least one of the venting openings (22").

13. The battery system (100) according to any one of the preceding claims, wherein one or more of the venting openings (22') of the cover plate (20) are surrounded by an inclined outer surface of the cover plate (20), the inclined outer surface being inclined towards the venting opening (22').

14. An electric vehicle comprising the battery system (100) according to any one of the preceding claims.
